# EUROPEAN PATENT SPECIFICATION

(11) **EP 1 500 757 B1**
(45) Date of publication and mention of the grant of the patent: **28.10.2009**
(21) Application number: 03380181.2
(22) Date of filing: 23.07.2003
(51) Int. Cl.: E04H 5/04

(54) **Prefabricated construction with passable cover for industrial applications**
Vorgefertigte Konstruktion mit durchgehbarem Deckel für industrielle Anwendungen
Construction préfabriquée avec couverture passable pour des applications industrielles

(43) Date of publication of application: 26.01.2005
(73) Proprietor: PREFABRICADOS UNIBLOK,S.L.U., 45223 Seseña Toledo (ES)
(72) Inventor: Apraiz Eguileor, Juan Maria, 48140 Igorre (Vizcaya) (ES); Verdoux Sastourne, Laurent, 45223 Sesena (Toledo) (ES); Sabas Fernandez, Jose Luis, 48140 Igorre (Vizcaya) (ES)
(74) Representative: Carpintero Lopez, Francisco

(56) References cited:
- EP-A- 0 209 027
- EP-A- 0 768 741
- DE-A- 4 135 850
- DE-A- 10 002 630
- DE-A- 10 009 013
- DE-U- 7 523 233
- DE-U- 20 212 484
- DE-U- 20 217 746
- DE-U- 20 219 709
- DE-U- 20 301 320
- DE-U- 29 902 866
- ORLHAC M: "LE POSTE SOCLE DANS LA MISE EN SOUTERRAIN DES RESEAUX RURAUX" REVUE GENERALE DE L'ELECTRICITE, RGE. PARIS, FR, no. 4, 1 April 1993 (1993-04-01), pages 23-25, XP000355859 ISSN: 0035-3116

## Description

### PURPOSE OF THE INVENTION

This invention refers to a prefabricated construction for industrial applications that can be used for telephony applications, or as a transformer centre, or for water pumping installations, gas distribution installations, etc.

The construction that is the subject of the invention has a hatch that allows easy access to its interior, to carry out typical maintenance or operation tasks on the installed equipment, but maintaining the watertightness of the equipment housed in the interior as well as providing protection for the operatives against atmospheric factors during their work.

A series of improved characteristics in the encasing and work platform that facilitate the working and operation of the equipment inside the construction are also a purpose of the invention.

### BACKGROUND TO THE INVENTION

Prefabricated constructions for industrial applications have normally been fabricated with an external concrete encasing wall, that could be a single-block type or be formed by fitting together various prefabricated elements, the upper part being closed off by means of a cover, and in whose interior different industrial equipment, for example for electrical, telephony, gas or water distribution, is housed.

These constructions are intended to protect the equipment from environmental conditions and in turn to provide protection from the equipment to third parties.

Different ways of carry out and classifying said constructions exist, one to them being that based on the visual impact that said construction has. Thus, in view of these criteria, the constructions could be classified as:
- Underground
- Semi-underground
- Surface mounted

Surface-mounted constructions, as distinct to underground ones, require little civil works for their installation, which benefits construction times, urban works and the final cost of the installation but, they have the drawback of visual and urban impact.

To reduce the visual impact underground constructions are used in which the equipment assembly remains below ground, while having a lid or cover that covers all the circumference of the encasing and that can be removed for the introduction or extraction of equipment, as well as a hatch for the access by the operatives to their interior, for operation and maintenance tasks. These types of construction have the drawback that they require major civil works for placing them underground.

As regards the semi-underground constructions, part of the encasing remains below ground level, that is, that part of the equipment remain underground and therefore the work platform also remains below ground level, which hinders access for the operatives to their interior. For this reason, large-sized hatches are normally used that allow access, but that require high performance mechanisms, pneumatic or hydraulic, to minimize the effort necessary in raising the hatch and to guarantee its good operation for several years.

Similarly, the constructions could be classified according to the need for access by the operatives to the interior to carry out maintenance or operation tasks. Thus said constructions would be classified as:
- Interior operation. Those in which the operative must enter the interior of the construction to carry out his work. In this context interior is understood as the area defined by the plan projection of the construction.
- Exterior operation. The operatives carry out the work from the outside of the construction, without the need of entering its interior

The interior operation constructions have the advantage of giving greater protection to the operatives against atmospheric effects, and above all, they offer less accessibility by the public to the installed equipment during its operation. However, this class of construction features the disadvantage of needing greater height to be able to house the operatives as well as the equipment. These constructions of course have access doors or even passable covers to permit entry of the operatives into their interior.

In this respect European Patent n° 0 768 741 pertaining to a semi-underground centre fitted with a passable cover that extends over the full width of the encasing can be mentioned that also forms part of its front closing, leaving a large free space through which the operative reaches a work platform situated below the ground-level. A similar solution is observed in European Patent 0 209 027.

The hatches used in these two Patents feature are of large dimensions because of which the necessary pneumatic or hydraulic props to assist in their opening must be high quality since they must guarantee their good operation for many years, which considerably increases their cost.

In the application PCT WO00/49248 a mobile telephony networks housing structure is shown that incorporates a passable hatch in the roof and a small front access door, through which the operative passes down to the work platform located inside the housing structure.

All these solutions are semi-undergrounded, with the aim of presenting reduced surface height that minimizes their visual impact, the work platforms remaining placed below their access level, which entails a risk of accidents when entering their interior.

Furthermore, the reduced clear height of these constructions diminishes the effectiveness of the internal ventilation, that is usually carried out by means of grills placed in the vertical walls.

Another drawback with this type of construction is that the rainwater can penetrate into their interior through the joint between the hatch and the cover. For this reason, the placing of watertight joints is usually resorted to, that, with the passing of time, can deteriorate and lose their properties. Furthermore, during operation of the equipment contained inside these constructions the water deposited on the roof can penetrate into the interior, damaging the existing electrical and electronic equipment.

Spanish Utility Model n° 1.049.753 relating to an internally-operated underground transformer centre that incorporates a passable roof for introducing and extracting equipment, and a hatch for operative access to its interior, for operation and maintenance tasks, can also be mentioned.

A container unit for equipments of Mobile Telephone Networks is described in the International Patent Application NO. WO 00/49248. This document is regarded as representing the closest prior art with respect to the present invention.

### DESCRIPTION OF THE INVENTION

The subject of the present invention is described in claim 1. Preferred embodiments are described in the dependent claims.

### DESCRIPTION OF THE DRAWINGS

Figure 1. - Shows a specific embodiment of the prefabricated construction with passable cover for industrial applications. Specifically it is a low height surface construction, with the purpose of minimizing its visual impact.
Figure 2. - Depicts the cover (2) of the building showing the protuberances (17) that allow its self-centering with respect to the main structure (1) of the building.
Figure 3. - Shows the building with the lid (3) of the cover (2) closed and interlocked with the door (9). The outflow of hot air through the perimeter ventilation (20) can also be noted.

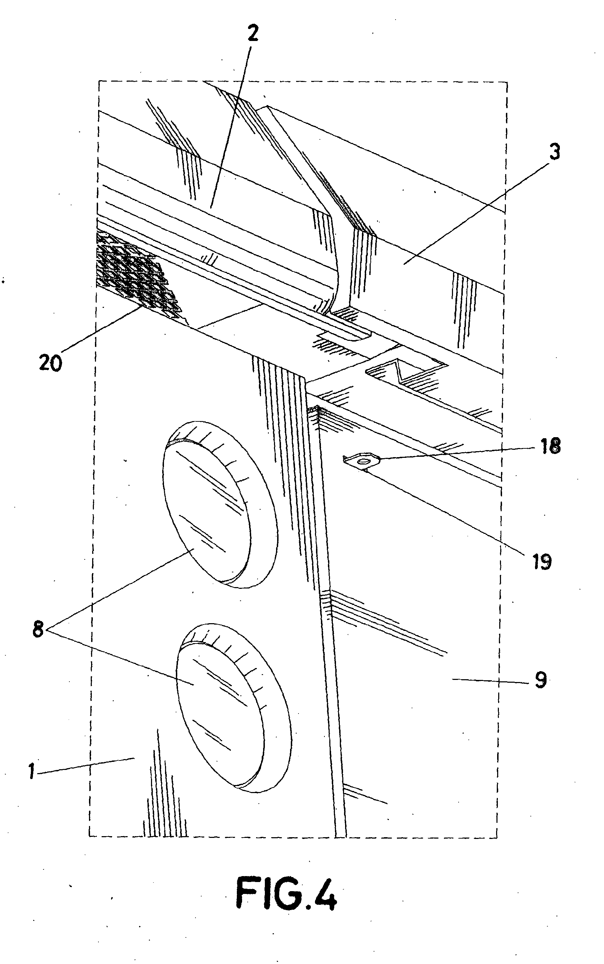

Figure 4. - Shows the detail of the seal between the door (9) and the hatch (3) of the building. The perimeter ventilation grill (20) can also be seen.

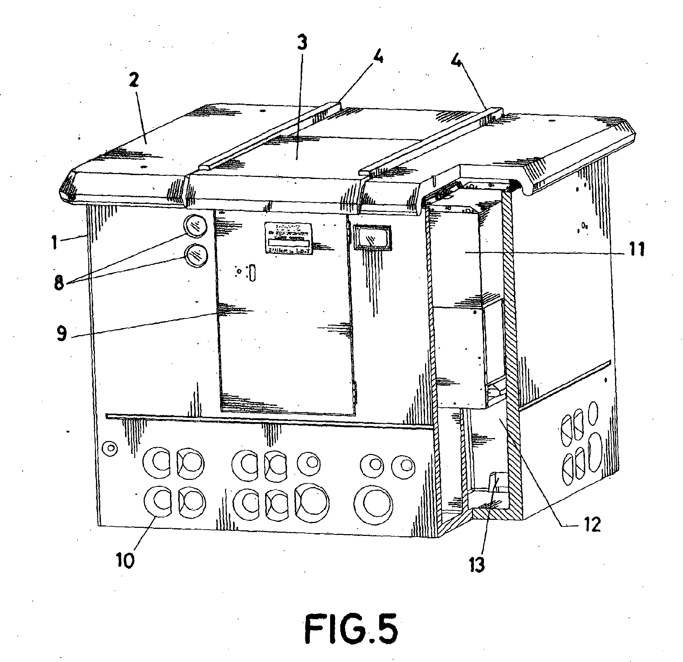

Figure 5. - Shows a cut-away in the building intended for use as a transformer centre, in which the medium voltage switchgear (11), the cables and gas expansion pit (12) and the opening (13) that communicates with the adjacent chamber, are seen.
Figure 6 - Shows a detail of the previous figure.
Figure 7. - Shows the formation of the false floor (21) by means of a frame (22) and a number of removable tiles (23).

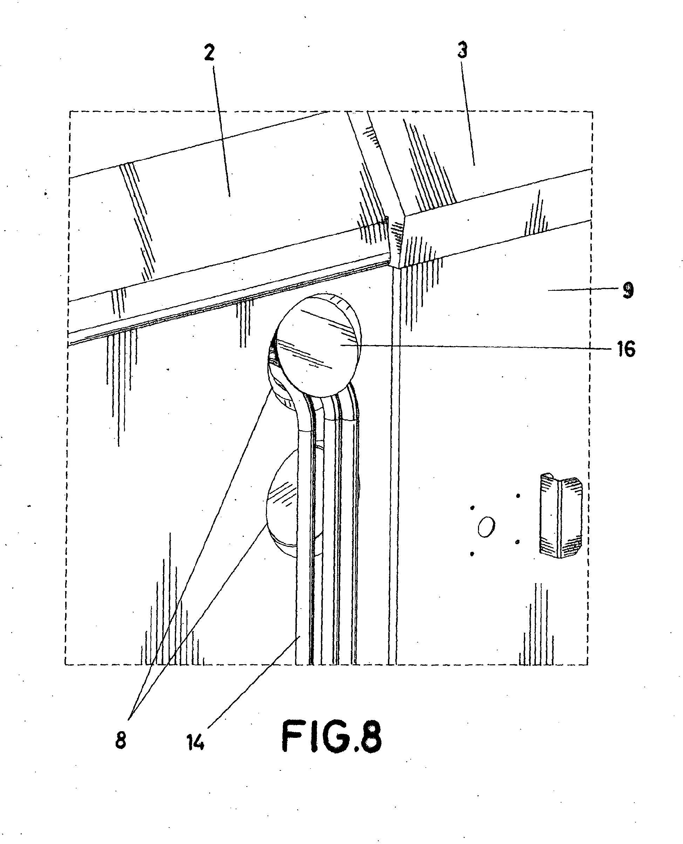

Figure 8. - Shows in detail the protection provided by the cap (16) when the equipment housed inside it is supplied via a number of auxiliary supply cables (14).

### PREFERABLE EMBODIMENT OF THE INVENTION

Below, as an illustrative and non-limiting example, an embodiment of the aforementioned prefabricated construction with passable cover for industrial applications, that is subject of the present invention, is presented.

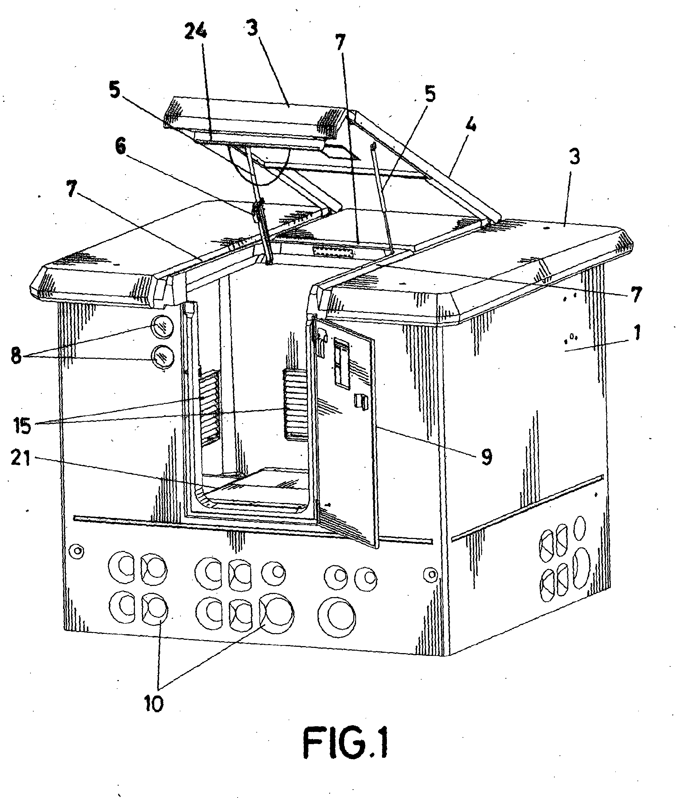

In figure 1 a prefabricated construction intended for use as a transformer centre is observed, comprising of an external encasing (1), an upper cover (2) that is supported by the encasing (1), and a work platform (21) that divides the internal space into an upper area in which the electrical switchgear is set out, and a lower area for cable access.

The construction shown is a surface and internal manoeuvring, that is, that only the cable area, that is set out beneath this work area, will be below ground and this latter will remain at ground level however, all the characteristics of the invention can equally be applied to a semi-undergrounded construction or an underground construction.

In accordance with the purpose of the invention the cover (2) incorporates a pivoting hatch (3) that extends to the edge of the cover corresponding with the position of an access door (9) that extends from the level of the work platform to the upper rim of the external encasing (1), thus defining a continuous and open space that provides easy access for the operative to the interior of the construction.

The hatch (3) remains positioned over what we could call the manoeuvring passage, that is the area which the operative reaches and from where he works, protecting him from unfavourable meteorological conditions.

As is also seen in the aforementioned Fig. 1, the pivoting hatch (3) only extends over part of the front of the cover (2), incorporating a number of side arms (4) that are extended beyond its end to be hinged at the opposite end of the cover (2), in such a way that the force necessary to raise the hatch decreases considerably. Furthermore, the pivoting axis being set back with respect to the edge of the cover (2) opening, the clear height left by the hatch is also greater, improving the operative's work conditions.

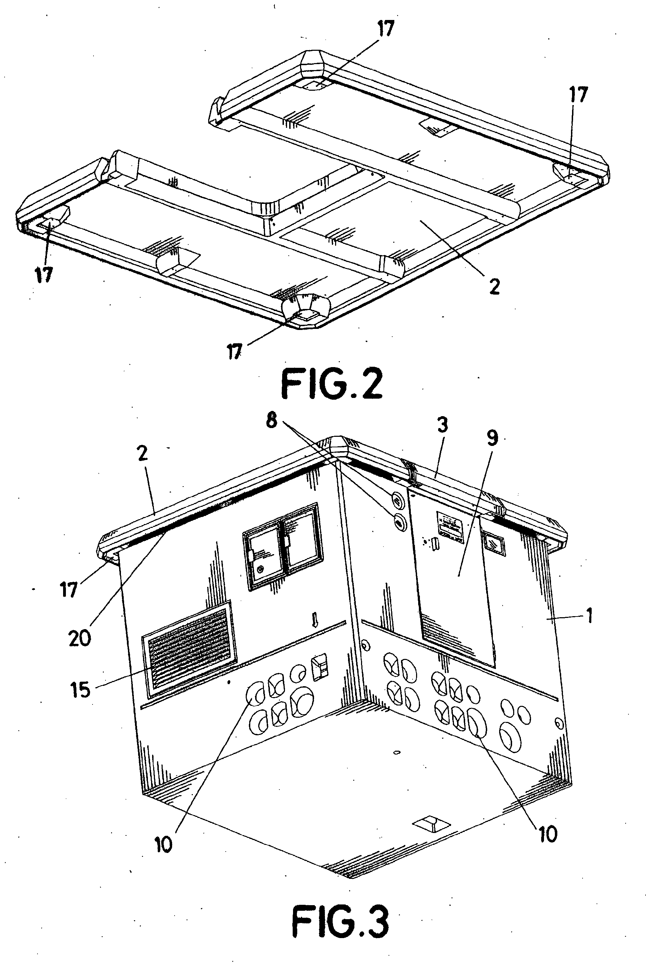

The aforementioned arms (4), as well as the perimeter edges of the hatch (3) lodge in a number of slots (7) planned in the cover (2). As is observed in Figure 2 these slots (7) form a H-shaped channel on the surface of the cover (2) and they also act as barriers that prevent the water deposited on the cover from penetrating inside the construction, both when this is closed and when the hatch is raised.

The hatch (3) is assisted by a number of props (5) that, because the hatch is of reduced dimensions, need less demanding operational specifications than for a cover of large dimensions, such as those more usual, because of which their useful life, and therefore the operation of the hatch are greater. In one of the props means of interlocking (6), that prevent the hatch from accidentally closing, are placed.

The hatch (3) has a front flap (24) that stays positioned behind the access door (9) producing interlocking between both in such a way that the hatch cannot be opened unless the door has previously been opened. To provide a higher degree of safety in the flap (24) of the cover (3) a projection (18) is placed that passes through a slot (19) in which a padlock can be placed that prevents the opening of the centre despite having the key of the access door (9).

With the purpose of being able to substitute the equipment housed inside the construction, the cover (2) is removable and it has protrusions (17) that have a number of angled in-steps or recesses intended to be seated onto each of the four upper corners of the external encasing (1), in such a way that, once the equipment has been substituted, the cover (2) is easily positioned onto the encasing (1) since the aforementioned protrusions (17) act as self-centering parts, thus allowing that the whole operation can be carried out by a single operative.

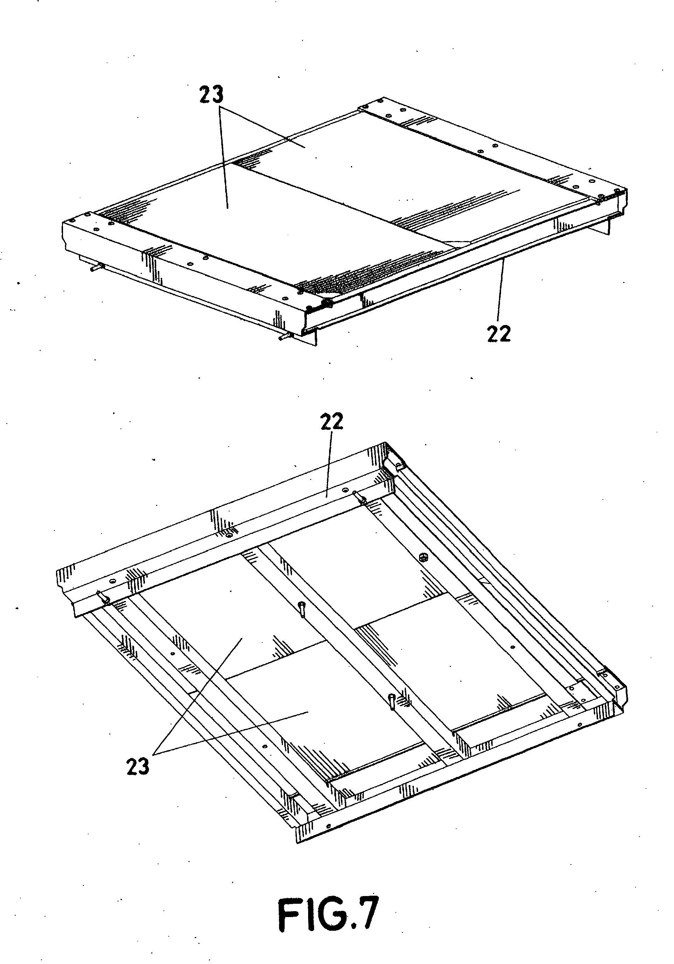

Another characteristic of the invention relates to the incorporation of a removable work platform (21), a platform that covers the floor of the operative's manoeuvring area, with the purpose of allowing the suspension, substitution and repair of cables. Specifically, as is observed in Fig. 7, the work platform is made up of a frame (22) and a number of removable tiles (23), the frame (22) having a shape that only allows the placing of the tiles (23) when the frame is correctly mounted, thus avoiding possible accidents inside the construction.

It has also been planned that, in any of the side faces of the external encasing (1), pre-formed knock-outs (10) be positioned, that allow the introduction of the cables, ducts, etc., in such a way that at the time of installation of the construction, and depending on its location, and the location of the infrastructure of which it will form part, the necessary openings are broken open and, after the introduction of the cables or ducts they are sealed again.

Since the encasing features a reduced height to guarantee good ventilation it has been planned that the air intake is effected through a number of grills (15) installed in the lower area of the encasing (1), while the hot air outflow takes place through the perimeter space (20) that remains free between the encasing (1) and the cover (2).

Also to point out that both the encasing (1) and the cover (2) can be single-block type structures; that is, that they are obtained from a mould in which reinforcing is placed and into which concrete is poured, or, through the use of metallic fibres in the actual concrete, thus requiring reinforcing of less demanding specification.

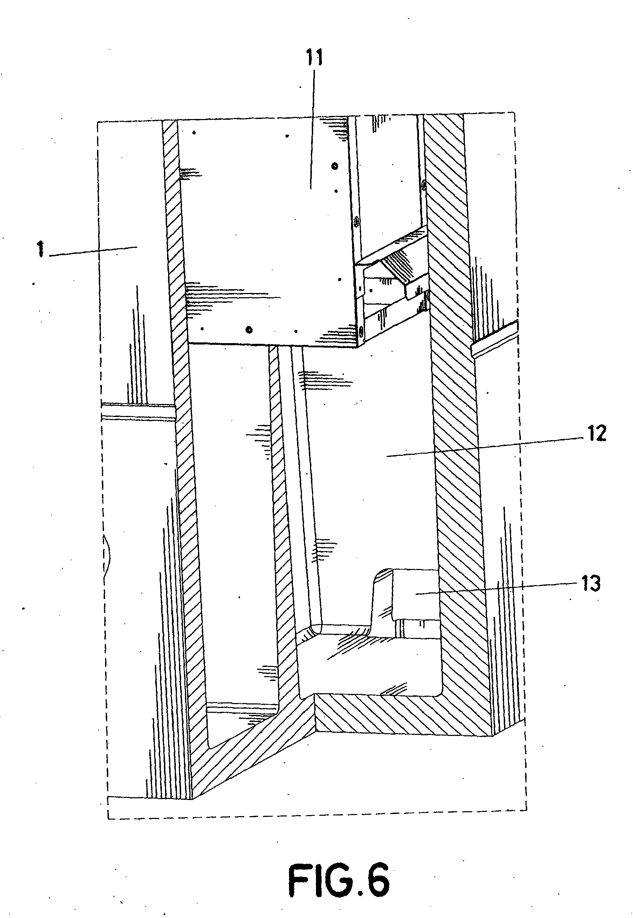

As is observed in Fig. 6, when the construction is used to house electrical equipment of a transformer centre, below the high tension cells a pit (12) that allows a prior expansion of the gases, is placed, that features an opening in one of its side partitions (13) that connects with an adjacent chamber of greater size, in which the complete decompression and cooling of the gases takes place, avoiding possible harm to the operative. In this way, the internal over-pressure produced by an internal arc in the high voltage cells is released.

Also, the centre has been fitted with a special cable entry that allows its supply in the event of fault. Specifically, in one of the encasing (1) faces a flap has been planned (8) that can be opened from the centre interior of the centre, and once the emergency cables (14) have been positioned, partially closed, also from the centre interior, in such a way that the centre can continue operating during the aforementioned emergency situation, but with a degree of safety in the introduction of the object greater or equal to IP 1X, decreasing the possibility of accidents.

## Claims

1. Prefabricated construction with passable cover for industrial applications whose upper cover (2) has a pivoting hatch (3) providing access to a manoeuvring passage located inside the construction, **characterised in that** the pivoting hatch (3) does not extend over the entire front of the construction, wherein the pivoting hatch (3) once open is positioned over said manoeuvring passage, said pivoting hatch (3) comprising a number of side arms (4) being hinged at points set back with respect to an inner edge of the area covered by the actual pivoting hatch (3), in such a manner that the force necessary to raise the hatch is decreased considerably in comparison with a hatch covering the same manoeuvring passage when closed but of which the covering portion extends back to said points, and **in that** the cover (2) has a number of barriers (7) that prevent water deposited on the cover (2) from penetrating inside the construction, even when said pivoting hatch (3) is raised.

2. Prefabricated construction in accordance with claim 1, **characterised in that** the barriers are made up in the shape of a slot or channel (7) on the cover (2), set out around the perimeter of the pivoting hatch.

3. Prefabricated construction in accordance with claim 1, **characterised in that** the pivoting hatch (3) in its open position provides the operative protection against climatic conditions, as well as greater clear height over the work area.

4. Prefabricated construction in accordance with the claim 1, **characterised in that** the pivoting hatch (3) has means of interlocking (6) that, in its open position avoid its partial or complete involuntary closing.

5. Prefabricated construction in accordance with claim 2, **characterised in that** the arms (4) and the perimeter of the pivoting hatch (3) are housed in the slots or channels (7) to be provided in the cover (2).

6. Prefabricated construction in accordance with claims 2 and 5, **characterised in that** the slots (7) that house the arms (4) and the barriers (7) that prevent the entry of water to the construction are the same.

7. Prefabricated construction in accordance with either of claims 1 and 2, **characterised in that** it consists of a main structure or external encasing (1) and said upper cover (2), independent from each other.

8. Prefabricated construction in accordance with claim 7, **characterised in that** the main structure (1) of the construction is single block.

9. Prefabricated construction in agreement with claim 7, **characterised in that** either said upper cover (2) or the main structure (1) or both, have a number of protrusions (17) to facilitate the self-centering of said upper cover (2) with respect to the main structure (1) of the construction.

10. Prefabricated construction in accordance with claim 7, **characterised in that** the main structure (1) and the cover (2) are made from reinforced concrete with metallic fibres.

11. Prefabricated construction in accordance with either of claims 1 and 2, **characterised in that** it is a surface-mounted or semi-underground construction.

12. Prefabricated construction in accordance with claim 11, **characterised in that** it incorporates perimeter ventilation (20).

13. Prefabricated construction in accordance with claim 11, **characterised in that** it incorporates an access door (9) inter-connected with the pivoting hatch (3) so that this latter can only be opened if the door (9) has previously been opened.

14. Prefabricated construction in accordance with claim 11, **characterised in that** the main structure (1) features pre-formed holes (10) for cable or pipework access.

15. Prefabricated construction in accordance with any of claims 8, 9, 12, and 13 , **characterised in that** it is intended to house a transformer centre of electrical power.

16. Prefabricated construction in accordance with claim 13, **characterised in that** below the high tension switchgear (11) a gas expansion chamber exists (12) that connects with an adjacent space or chamber by means of an opening (13).

17. Prefabricated construction in accordance with claim 13, **characterised in that** in the main structure (1) of the centre has a cable access detachable flap (8), for access for assistance power supply cables (14) to the centre, a flap that can be partially closed from the interior of the centre, to provide a high degree of security against the introduction of objects from the exterior through the aforementioned flap (8).

## Patentansprüche

1. Vorgefertigter Aufbau mit durchgehbarer Abdeckung für industrielle Anwendungen, dessen obere Abdeckung (2) eine schwenkbare Klappe (3) aufweist, die Zugang zu einem innerhalb des Aufbaus angeordneten Manövrierdurchgang ermöglicht, **dadurch gekennzeichnet, dass** sich die schwenkbare Klappe (3) nicht über die gesamte Vorderseite des Aufbaus erstreckt, wobei die schwenkbare Klappe (3), sobald sie geöffnet ist, über dem Manövrierdurchgang angeordnet ist und die schwenkbare Klappe (3) eine Anzahl von Seitenarmen (4) umfasst, die an Stellen, die mit Bezug auf einen inneren Rand des durch die eigentliche schwenkbare Klappe (3) abgedeckten Bereichs zurückgesetzt sind, auf eine solche Weise eingehängt sind, dass die erforderliche Kraft zum Anheben der Klappe verglichen mit einer Klappe, die, wenn sie geschlossen ist, den gleichen Manövrierdurchgang abdeckt, aber deren Abdeckabschnitt sich zu diesen Stellen zurück erstreckt, wesentlich verringert ist, und dass die Abdeckung (2) eine Anzahl von Barrieren (7) aufweist, die verhindern, dass auf der Abdeckung (2) abgelagertes Wasser in den Aufbau eindringt, sogar wenn die schwenkbare Klappe (3) angehoben ist.

2. Vorgefertigter Aufbau nach Anspruch 1, **dadurch gekennzeichnet, dass** die Barrieren in der Form eines Schlitzes oder Kanals (7) an der Abdeckung (2) ausgebildet sind, der um den Umfang der schwenkbaren Klappe herum angeordnet ist.

3. Vorgefertigter Aufbau nach Anspruch 1, **dadurch gekennzeichnet, dass** die schwenkbare Klappe (3) in deren geöffneter Stellung den Betriebsschutz gegen Klimabedingungen sowie eine größere lichte Höhe über dem Arbeitsbereich bietet.

4. Vorgefertigter Aufbau nach Anspruch 1, **dadurch gekennzeichnet, dass** die schwenkbare Klappe (3) Verriegelungsmittel (6) aufweist, die in deren geöffneter Stellung deren teilweises oder vollständiges unbeabsichtigtes Schließen verhindern.

5. Vorgefertigter Aufbau nach Anspruch 2, **dadurch gekennzeichnet, dass** die Arme (4) und der Umfang der schwenkbaren Klappe (3) in den in der Abdeckung (2) vorzusehenden Schlitzen oder Kanälen (7) aufgenommen sind.

6. Vorgefertigter Aufbau nach Ansprüchen 2 und 5, **dadurch gekennzeichnet, dass** die Schlitze (7), welche die Arme (4) aufnehmen, und die Barrieren (7), die das Eindringen von Wasser in den Aufbau verhindern, dieselben sind.

7. Vorgefertigter Aufbau nach einem der Ansprüche 1 und 2, **dadurch gekennzeichnet, dass** dieser aus einer Hauptstruktur oder äußeren Ummantelung (1) und der oberen Abdeckung (2) besteht, die voneinander unabhängig sind.

8. Vorgefertigter Aufbau nach Anspruch 7, **dadurch gekennzeichnet, dass** die Hauptstruktur (1) des Aufbaus ein einzelner Block ist.

9. Vorgefertigter Aufbau nach Anspruch 7, **dadurch gekennzeichnet, dass** entweder die obere Abdeckung (2) oder die Hauptstruktur (1) oder beide eine Anzahl von Vorsprüngen (17) aufweisen, um die Selbstzentrierung der oberen Abdeckung (2) mit Bezug auf die Hauptstruktur (1) des Aufbaus zu ermöglichen.

10. Vorgefertigter Aufbau nach Anspruch 7, **dadurch gekennzeichnet, dass** die Hauptstruktur (1) und die Abdeckung (2) aus verstärktem Beton mit Metallfasern bestehen.

11. Vorgefertigter Aufbau nach einem der Ansprüche 1 und 2, **dadurch gekennzeichnet, dass** dieser ein an der Oberfläche angeordneter Aufbau oder ein halb-erdverlegter Aufbau ist.

12. Vorgefertigter Aufbau nach Anspruch 11, **dadurch gekennzeichnet, dass** dieser eine Umfangsbelüftung (20) umfasst.

13. Vorgefertigter Aufbau nach Anspruch 11, **dadurch gekennzeichnet, dass** dieser eine Zugangstür (9) umfasst, die so mit der schwenkbaren Klappe (3) verbunden ist, dass diese letztere nur geöffnet werden kann, wenn die Tür (9) zuvor geöffnet wurde.

14. Vorgefertigter Aufbau nach Anspruch 11, **dadurch gekennzeichnet, dass** die Hauptstruktur (1) vorgeformte Öffnungen (10) für Kabel- oder Rohrleitungszugang aufweist.

15. Vorgefertigter Aufbau nach einem der Ansprüche 8, 9, 12 und 13, **dadurch gekennzeichnet, dass** dieser dafür vorgesehen ist, ein Transformatorzentrum elektrischer Leistung aufzunehmen.

16. Vorgefertigter Aufbau nach Anspruch 13, **dadurch gekennzeichnet, dass** unterhalb der Hochspannungsschalteinrichtung (11) eine Gasexpansionskammer (12) vorgesehen ist, die durch eine Öffnung (13) mit einem danebenliegenden Raum oder einer danebenliegenden Kammer verbunden ist.

17. Vorgefertigter Aufbau nach Anspruch 13, **dadurch gekennzeichnet, dass** die Hauptstruktur (1) des Zentrums eine abnehmbare Kabelzugangsklappe (8) für den Zugang für Hilfsleistungszufuhrkabel (14) zu dem Zentrum aufweist, wobei die Klappe vom Inneren des Zentrums aus teilweise geschlossen werden kann, um ein hohes Maß an Sicherheit gegen die Einführung von Objekten von der Außenseite aus durch die vorgenannte Klappe (8) zu bieten.

## Revendications

1. Construction préfabriquée avec une couverture franchissable pour des applications industrielles dont la couverture supérieure (2) possède une trappe pivotante (3) fournissant l'accès à un passage de manoeuvre situé à l'intérieur de la construction, **caractérisée en ce que** la trappe pivotante (3) ne s'étend pas au-delà de l'ensemble de l'avant de la construction, où la trappe pivotante (3) une fois ouverte est positionnée au-dessus dudit passage de manoeuvre, ladite trappe pivotante (3) comprenant un nombre de bras latéraux (4) articulés à des points définis en arrière par rapport à un bord intérieur de la région couverte par la trappe pivotant réellement (3), d'une manière telle que la force nécessaire pour élever la trappe est considérablement réduite en comparaison avec une trappe recouvrant le même passage de manoeuvre quand elle est fermée mais dont la partie de couverture s'étend en arrière desdits points; et **en ce que** la couverture (2) possède un nombre de barrières (7) qui empêchent l'eau déposée sur la couverture (2) de pénétrer à l'intérieur de la construction même quand ladite trappe pivotante (3) est levée.

2. Construction préfabriquée selon la revendication 1, **caractérisée en ce que** les barrières sont faites sous la forme d'une fente ou d'un canal (7) sur la couverture (2), placée autour du périmètre de la trappe pivotante.

3. Construction préfabriquée selon la revendication 1, **caractérisée en ce que** la trappe pivotante (3) dans sa position ouverte fournit la protection opérationnelle contre les conditions climatiques, ainsi qu'une plus grande hauteur de dégagement sur la région de travail.

4. Construction préfabriquée selon la revendication 1, **caractérisée en ce que** la trappe pivotante (3) possède des moyens de verrouillage (6) qui, dans leur position ouverte évitent sa fermeture involontaire partielle ou complète.

5. Construction préfabriquée selon la revendication 2, **caractérisée en ce que** les bras (4) et le périmètre de la trappe pivotante (3) sont logés dans les fentes ou canaux (7) prévus dans la couverture (2).

6. Construction préfabriquée selon les revendications 2 et 5, **caractérisée en ce que** les fentes (7) qui logent les bras (4) et les barrières (7) qui empêchent l'entrée de l'eau dans la construction sont identiques.

7. Construction préfabriquée selon l'une quelconque des revendications 1 et 2, **caractérisée en ce qu'**elle consiste en une structure principale ou enceinte externe (1) et ladite couverture supérieure (2), indépendamment l'une de l'autre.

8. Construction préfabriquée selon la revendication 7, **caractérisée en ce que** la structure principale (1) de la construction est un bloc unitaire.

9. Construction préfabriquée selon la revendication 7, **caractérisée en ce que** ladite couverture supérieure (2) ou la structure principale (1) ou les deux, possède un nombre de saillies (17) pour faciliter l'autocentrage de ladite couverture supérieure (2) par rapport à la structure principale (1) de la construction.

10. Construction préfabriquée selon la revendication 7, **caractérisée en ce que** la structure principale (1) et la couverture (2) sont faites de béton renforcé avec des fibres métalliques.

11. Construction préfabriquée selon l'une quelconque des revendications 1 et 2, **caractérisée en ce qu'**il s'agit d'une construction montée en surface ou semi-enterrée.

12. Construction préfabriquée selon la revendication 11, **caractérisée en ce qu'**elle incorpore une ventilation périmétrique (20).

13. Construction préfabriquée selon la revendication 11, **caractérisée en ce qu'**elle incorpore une porte d'accès (9) reliée avec la trappe pivotante (3) de sorte que cette dernière puisse seulement être ouverte si la porte (9) à été précédemment ouverte.

14. Construction préfabriquée selon la revendication 11, **caractérisée en ce que** la structure principale (1) présente des trous préformés (10) pour l'accès de câbles ou de conduites.

15. Construction préfabriquée selon l'une quelconque des revendications 8, 9, 12, et 13, **caractérisée en ce qu'**elle est destinée à loger un centre transformateur d'énergie électrique.

16. Construction préfabriquée selon la revendication 13, **caractérisée en ce que** sous le dispositif de commutation à haute tension (11) existe une chambre d'expansion de gaz (12) qui est reliée à un espace ou une chambre adjacent au moyen d'une ouverture (13).

17. Construction préfabriquée selon la revendication 13, **caractérisée en ce que** dans la structure principale (1) du centre est présent un volet détachable d'accès aux câbles (8), pour accéder à des câbles d'alimentation électrique de secours (14) au centre, un volet qui peut être partiellement fermé de l'intérieur du centre, pour fournir un degré élevé de sécurité contre l'introduction d'objets provenant de l'extérieur à travers le volet mentionné précédemment (8).
